# EUROPÄISCHE PATENTSCHRIFT

(11) **EP 1 484 526 B1**
(45) Veröffentlichungstag und Bekanntmachung des Hinweises auf die Patenterteilung: **30.11.2005**
(21) Anmeldenummer: 04011723.6
(22) Anmeldetag: 18.05.2004
(51) Int. Cl.: F16F 9/19, F16F 9/32

(54) **Schwingungsdämpfer zur amplitudenabhängigen Dämpfung von Stössen**
Shock absorber with amplitude-dependent damping
Amortisseur de chocs avec amortissement dépendant de l'amplitude

(30) Priorität: 06.06.2003 DE 10325877
(43) Veröffentlichungstag der Anmeldung: 08.12.2004
(73) Patentinhaber: ThyssenKrupp Bilstein GmbH, 58256 Ennepetal (DE)
(72) Erfinder: Diederich, Manfred, Dipl.-Ing., 56769 Bereborn (DE); Kirch, Jan, Dipl.-Ing., 54294 Trier (DE); Stüber, Werner, 54429 Mandern (DE)
(74) Vertreter: Adams, Steffen

(56) Entgegenhaltungen:
- DE-A- 19 738 617
- DE-B- 1 264 165
- DE-C- 946 758
- DE-U- 1 911 804
- FR-A- 1 419 551
- US-A- 2 911 072

## Beschreibung

Die Erfindung betrifft eine Einrichtung zur amplitudenabhängigen Dämpfung von Stößen, insbesondere bei Stoßdämpfern für Kraftfahrzeuge nach dem kennzeichnenden Teil des Anspruchs 1.

Insbesondere bei Stoßdämpfern für Kraftfahrzeuge ist es gewünscht, dass hochfrequente Schwingungen mit geringer Amplitude nicht vom eigentlichen Dämpfungsmechanismus des Stoßdämpfers abgefangen werden. Derartige hochfrequente Schwingungen können ausgelöst werden durch das Profil des rollenden Reifens oder geringe Unwuchten des Rades. Sofern diese hochfrequenten Schwingungen mit niedriger Amplitude dem eigentlichen Dämpfungsmechanismus zugeführt werden, kommt es zu Losbrecheffekten, hervorgerufen durch den Stick-Slip-Effekt des Dämpfungskolbens am Dämpfungsgehäuse, was zu einer für den Fahrzeuginsassen spürbaren Unruhe der Radaufhängung führt.

Es gibt mehrere Lösungsvorschläge, um dieses Problem zu lösen.

Nach der US-PS 3,232,390 ist es bekannt, Resonanzfrequenzen dadurch auszuschließen, dass bei einem Stoßdämpfer für Kraftfahrzeuge der Dämpfungskolben axial verschieblich federbelastet am Ende der Kolbenstange befestigt ist.

Diese Ausbildung ist sehr aufwändig und ist auch nicht geeignet, hochfrequente Schwingungen mit niedriger Amplitude in beiden Schwingungsrichtungen zu dämpfen.

Aus der DE 35 03 153 A1 ist eine Einrichtung bekannt, bei der der Kolben mittels einer Führungsbuchse auf der Kolbenstange axial verschiebbar gelagert ist. Der Kolben ist mitsamt den Ventilscheiben (Ventilschließgliedern) zwischen zwei Kraftspeichern, die als Tellerfedern ausgebildet sind, angeordnet. Diese Kraftspeicher dienen als Abstützglieder, gegen die sich die Ventilschließglieder abstützen. Unter der Wirkung eines lastabhängigen Flüssigkeitsdruckes im Dämpferzylinder verlagern sich Kolben und Abstützglied in axialer Richtung relativ zueinander und dabei wird das Abstützglied mit sich verändernder Kraft an das Ventilschließglied angepresst. Die aus dieser Druckschrift bekannte Einrichtung weist keine amplitudenabhängigen Dämpfungseigenschaften auf. Es ist kein die Dämpfungsräume miteinander koppelnder Bypass vorhanden, durch den die Dämpfungsflüssigkeit bei geringen Amplituden, d.h. bei nur geringem Druckunterschied zwischen den Dämpfungsräumen, hindurchströmen könnte, so dass keine Verschiebung des Arbeitskolbens auf der Führungsbuchse erfolgt.

Der Erfindung liegt die Aufgabe zugrunde, eine Einrichtung zur amplitudenabhängigen Dämpfung von Stößen zu schaffen, die einfach aufgebaut ist, sicher funktioniert und keinen wesentlichen zusätzlichen Bauraum benötigt.

Die Aufgabe wird mit den Merkmalen des Anspruchs 1 gelöst. Vorteilhafte Aus- und Weiterbildungen sind in den Ansprüchen 2 bis 7 beschrieben.

Der mit der Erfindung erzielte Vorteil liegt insbesondere in dem vereinfachten Aufbau der erfindungsgemäßen Einrichtung. Weiterhin vorteilhaft verringert sich der Einbauraum im Dämpfungsgehäuse. Darüber hinaus vorteilhaft lassen sich in einfacher Weise unterschiedliche Bauelemente für unterschiedliche Anforderungen an die Dämpfungscharakteristik miteinander kombinieren.

Ein Ausführungsbeispiel der Erfindung ist in der Zeichnung dargestellt und wird im Folgenden näher beschrieben. Es zeigen
- Fig. 1: einen Schnitt durch ein Dämpfungsgehäuse eines Stoßdämpfers mit dem Arbeitskolben am Ende der Kolbenstange,
- Fig. 2 bis 5: unterschiedliche Herstellungsvarianten des Arbeitskolbens,
- Fig. 6: einen Halbschnitt durch das Ende der Kolbenstange einschließlich des aufgebauten Kolbens mit Stahlfederpaketen und
- Fig. 7: einen Schnitt gemäß Fig. 6 mit Kunststofffedern.

Bei einem Stoßdämpfer für Kraftfahrzeuge, wie er im Ausführungsbeispiel zugrunde gelegt ist, taucht die Kolbenstange 1 mit einem Ende in das Dämpfungsgehäuse 2 ein. Am Ende der Kolbenstange 1 ist ein Arbeitskolben 3 angeordnet, der sich radial gegen den Innenmantel des Dämpfungsgehäuses 2 abstützt. Dadurch wird das Dämpfungsgehäuse 2 in zwei Dämpfungsräume 4, 5 aufgeteilt. Bei oszillierendem Eintauchen der Kolbenstange 1 in das Dämpfungsgehäuse 2 muss die die Dämp fungsräume 4, 5 füllende Dämpfungsflüssigkeit den Arbeitskolben 3 durchströmen, was zur Dämpfung der Bewegung der eintauchenden Kolbenstange 1 führt.

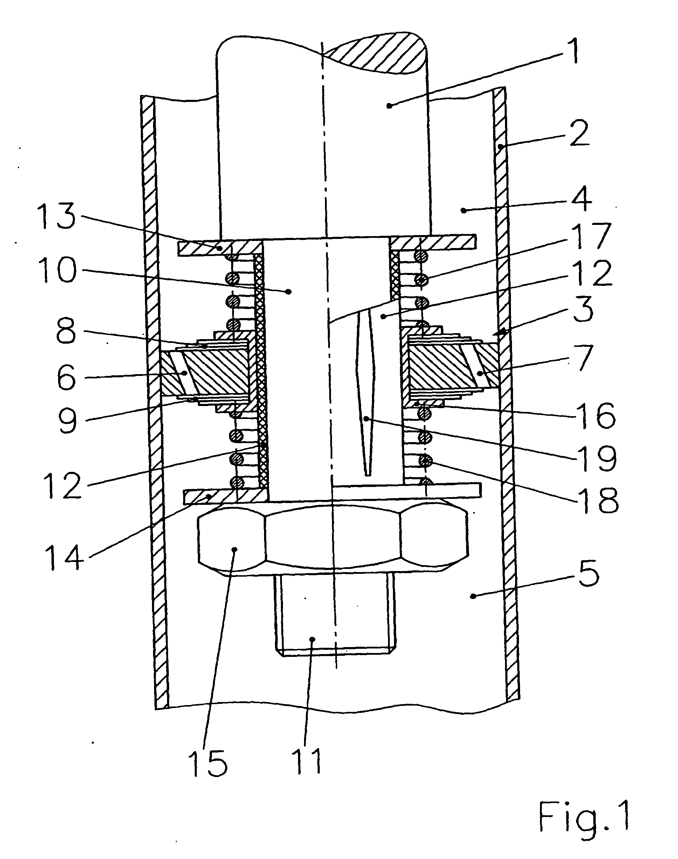

Der Dämpfungskolben 3 weist unterschiedliche Durchströmöffnungen 6, 7 auf, welche einseitig mit Federscheiben 8, 9 abgedeckt sind, wie dieses in Fig. 1 dargestellt ist. Diese Konstruktion bildet somit jeweils in einer Richtung wirkende Rückschlagventile mit unterschiedlichen Durchströmwiderstandskennlinien in der anderen Richtung. In den weiteren Figuren ist dieses nur schematisch dargestellt.

Die Kolbenstange 1 läuft an ihrem eintauchenden Ende in einen Zapfen 10 mit gegenüber der Kolbenstange 1 verringertem Durchmesser aus. Am unteren Ende des Zapfens 10 ist ein Gewinde 11 aufgebracht.

Der Dämpfungskolben 3 ist radial verschieblich gleitbar auf diesem Zapfen 10 angebracht. Im Ausführungsbeispiel liegt radial zwischen dem Zapfen 10 und dem Arbeitskolben 3 eine Führungsbuchse 12, die vorzugsweise aus einem Material mit guten Gleiteigenschaften besteht. Jeweils am Ende der Führungsbuchse 12 sind Anschlagscheiben 13, 14 angeordnet. Die Führungsbuchse 12 und die Anschlagscheiben 13 und 14 werden über eine mit dem Gewinde 11 zusammenwirkende Mutter 15 axial auf dem Zapfen 10 verspannt.

Der Arbeitskolben 3 weist an seiner Innenbohrung ein Spann- und Gleitgehäuse 16 auf, das einerseits die Gleitführung des Arbeitskolbens 3 gewährleistet und andererseits die Einzelteile des Arbeitskolbens 3, wie den Grundkörper und die Federscheiben 8, 9, unter der gewählten Vorspannung zusammenhält.

Zwischen den jeweiligen Anschlagscheiben 13, 14 und dem Arbeitskolben 3 sind beidseitig Federn 17, 18 angebracht. Diese Federn 17, 18 dienen zum einen dazu, den Arbeitskolben 3 bei ausgeglichenen Druckverhältnissen zwischen den Dämpfungsräumen 4 und 5 etwa in der Mitte des durch die Länge der Buchse 12 definierten Schwingungsraums zu halten. Zum anderen dienen sie aufgrund ihrer Federwirkung dazu, die Verschiebung des Arbeitskolbens 3 zum Ende des Verschiebungsweges hin abzubremsen. Die Federn 17, 18 sind in Fig. 1 nur schematisch dargestellt. Im einfachsten Fall kann es sich um Wendelfedem handeln, die einen Innendurchmesser aufweisen, der geringfügig größer ist als der Außendurchmesser der Buchse 12.

Wie aus Fig. 1 erkennbar, ist in die Oberfläche der Führungsbuchse 12 wenigstens eine Nut 19 eingebracht. Die Länge dieser Nut 19 ist größer als die Dicke des Arbeitskolbens 3. Der Querschnitt der Nut 19 ist über seine Länge unterschiedlich. Wie aus Fig. 1 ersichtlich, ist der Querschnitt der Nut 19 im Mittelbereich am größten und verringert sich zu den anschlagseitigen Enden der Führungsbuchse 12. Entsprechend den jeweiligen Erfordernissen können auch andere Querschnittsveränderungen, aber auch ein gleich bleibender Querschnitt der Nut 19 gewählt werden

Die Nut 19 dient als Bypass für den Strömungsausgleich zwischen den Dämpfungsräumen 4, 5. Bei nur geringem Druckunterschied zwischen diesen Dämpfungsräumen 4, 5 kann die Dämpfungsflüssigkeit diesen als Nut 19 ausgebildeten Bypass durchströmen, ohne dass sich der Arbeitskolben 3 auf der Führungsbuchse 12 bewegt.

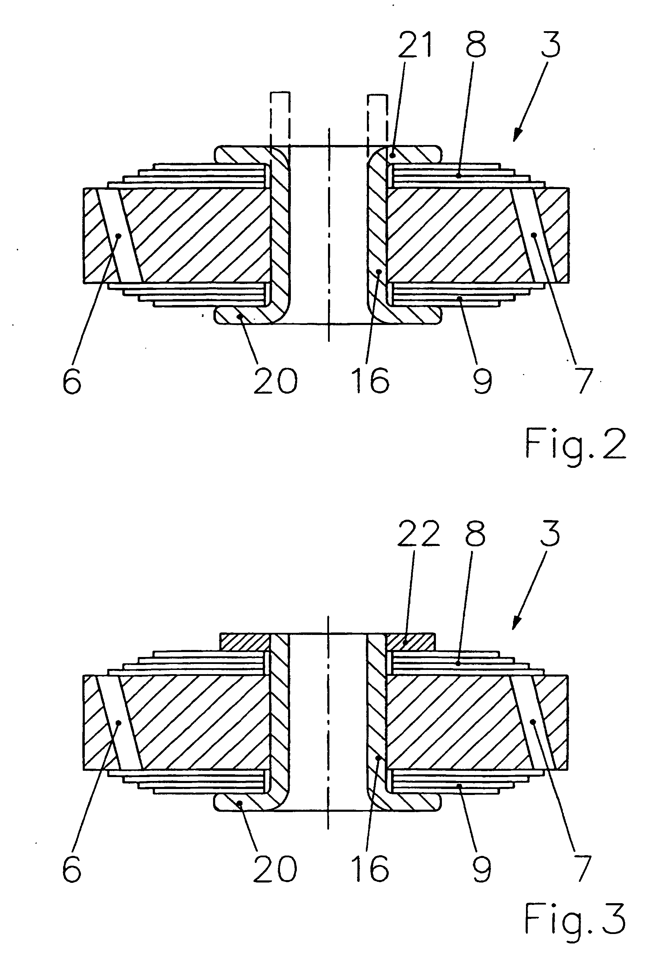

In den Fig. 2 bis 5 sind verschiedene Bauformen des Spann- und Gleitgehäuses 16 dargestellt. Bei der Ausbildung gemäß Fig. 2 wird zur Herstellung des Spann- und Gleitgehäuses 16 von einer Buchse mit einem einseitigen Flansch 20 ausgegangen, auf den dann die Federscheibenpakete 8, 9 sowie der Grundkörper des Arbeitskolbens 13 aufgebracht werden. Danach wird der gestrichelt dargestellte Überstand der Buchse nach außen zu einem zweiten Flansch 21 umgebördelt.

Bei der Ausbildung gemäß Fig. 3 wird ebenfalls von einer Buchse mit einem einseitigen Flansch 20 ausgegangen. Hier wird auf das freie Ende der Buchse ein Haltering 22 mittels Aufschrumpfen, Aufpressen oder Verschweißen befestigt.

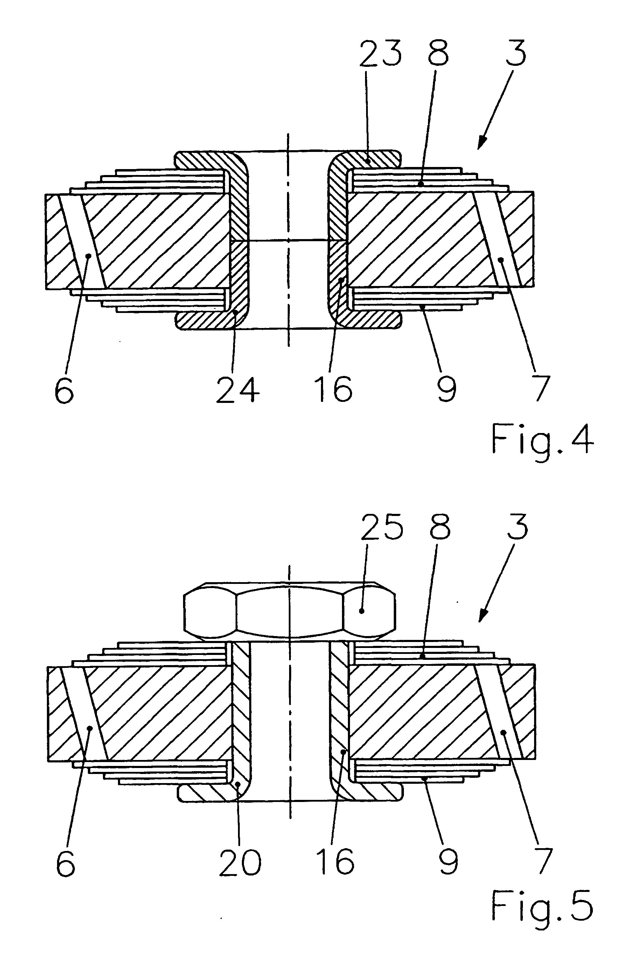

Zum Herstellen des Spann- oder Gleitgehäuses 16 gemäß Fig. 4 wird von zwei Buchsen mit jeweils einseitig angeordnetem Flansch 23, 24 ausgegangen. Diese beiden Buchsen werden nach der Montage der Arbeitskolbenteile etwa mittig im Grundkörper durch Pressschweißen miteinander verbunden.

Bei der Ausbildung gemäß Fig. 5 wird wiederum von einer Buchse mit einem einseitigen Flansch 20 ausgegangen. Das überstehende Ende dieser Buchse ist mit einem Außengewinde versehen. Durch Aufschrauben einer Mutter 25 erfolgt hier die Endmontage.

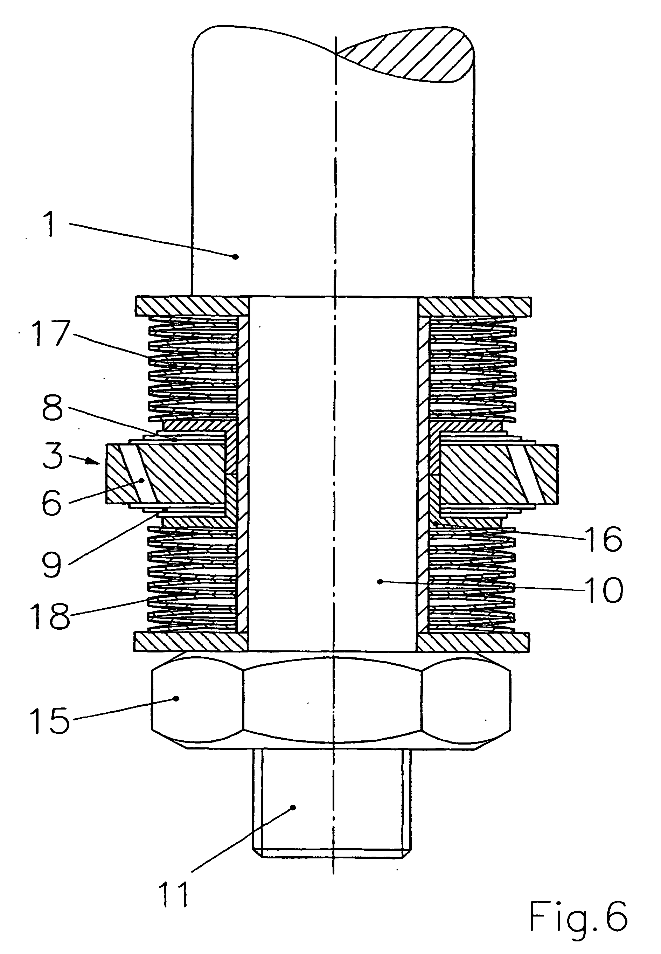

Die in Fig. 6 gezeigten Federn 17, 18 sind als Federpakete aus Einzelfedern zusammengesetzt. Im Ausführungsbeispiel handelt es sich hier um Wellfedern. Es können jedoch in gleicher Weise beispielsweise Tellerfedem eingesetzt werden.

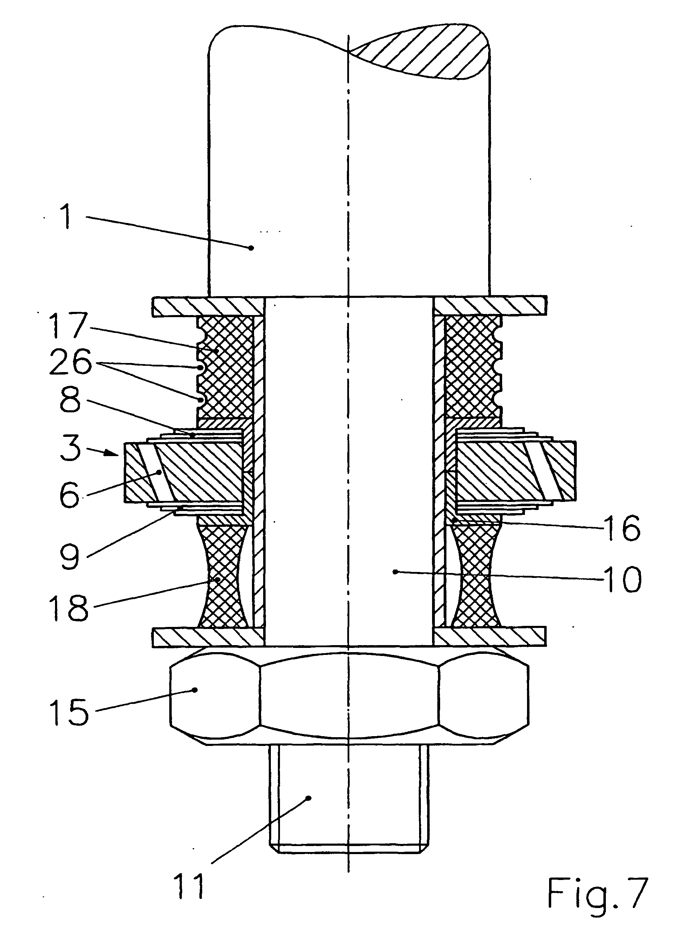

Bei den in Fig. 7 dargestellten Federn handelt es sich um Kunststofffedern, die entweder als reine Blockfedern ausgebildet sein können oder aber wie in Fig. 7 konturiert sind. Bei der in Fig. 7 oben dargestellten Kunststofffeder handelt es sich um eine Blockfeder, dessen Kontur am Außenmantel mit Nuten 26 versehen ist. Die in Fig. 7 unten dargestellte Kunststofffeder weist einen sich zur Mitte der Federhöhe verdünnenden Querschnitt auf.

### Bezugszeichenliste

- 1.: Kolbenstange
- 2.: Dämpfungsgehäuse
- 3.: Arbeitskolben
- 4.: Dämpfungsraum
- 5.: Dämpfungsraum
- 6.: Durchströmöffnung
- 7.: Durchströmöffnung
- 8.: Federscheibe
- 9.: Federscheibe
- 10.: Zapfen
- 11.: Gewinde
- 12.: Führungsbuchse
- 13.: Anschlagscheibe
- 14.: Anschlagscheibe
- 15.: Mutter
- 16.: Spann- und Gleitgehäuse
- 17.: Feder
- 18.: Feder
- 19.: Nut
- 20.: Flansch
- 21.: Flansch
- 22.: Haltering
- 23.: Flansch
- 24.: Flansch
- 25.: Mutter
- 26.: Nut

## Patentansprüche

1. Einrichtung zur amplitudenabhängigen Dämpfung von Stößen, insbesondere bei Stoßdämpfern für Kraftfahrzeuge, mit einem innerhalb eines Dämpfungsgehäuses (2) angeordneten, an eine oszillierend in das Dämpfungsgehäuse (2) eintauchenden Kolbenstange (1), radial geführt und axial federbelastet begrenzt verschieblich, das Dämpfungsgehäuse (2) in zwei Dämpfungsräume (4, 5) aufteilend angebundenen Arbeitskolben (3), wobei der Arbeitskolben (3) axial zwischen zwei Federn (17, 18) eingespannt ist und wobei die Kolbenstange (1) in einen vom Arbeitskolben (3) umgebenen Zapfen (10) ausläuft und zwischen Zapfen (10) und Arbeitskolben (3) eine Führungsbuchse (12) angeordnet ist, **dadurch gekennzeichnet, dass** am Außenumfang der Führungsbuchse (12) wenigstens eine sich axial erstreckende, eine größere Länge als die Höhe der korrespondierenden Bohrung des Arbeitskolbens (3) aufweisende Nut (19) angeordnet ist.

2. Einrichtung nach Anspruch 1, **dadurch gekennzeichnet, dass** die Nut (19) einen über die Höhe veränderlichen Querschnitt aufweist.

3. Einrichtung nach Anspruche 1 oder 2, **dadurch gekennzeichnet, dass** die jeweils oberhalb und unterhalb des Arbeitskolbens (3) angeordneten Federn (17, 18) eine unterschiedliche Steifigkeit und/oder Federrate aufweisen.

4. Einrichtung nach einem oder mehreren der Ansprüche 1 bis 3, **dadurch gekennzeichnet, dass** wenigstens eine der Federn (17, 18) eine progressiv, linear oder degressiv ansteigende Federrate aufweisen.

5. Einrichtung nach einem oder mehreren der Ansprüche 1 bis 4, **dadurch gekennzeichnet, dass** die Federn (17, 18) als Stahlfedern ausgebildet sind.

6. Einrichtung nach einem oder mehreren der Ansprüche 1 bis 4, **dadurch gekennzeichnet, dass** die Federn (17, 18) als Kunststofffedern ausgebildet sind.

7. Einrichtung nach einem oder mehreren der Ansprüche 1 bis 6, **dadurch gekennzeichnet, dass** die Federn (17, 18) aus mehreren Einzelfedern zu einem Federpaket zusammengesetzt sind.

## Claims

1. Device for amplitude-dependent damping of shocks, in particular in shock absorbers for motor vehicles, having a working piston (3) which is disposed inside a damping housing (2) and is attached to a piston rod (1), which passes in an oscillating manner into the damping housing (2), in a radially guided and axially spring-loaded limitedly displaceable manner in such a way as to divide the damping housing (2) into two damping chambers (4, 5), wherein the working piston (3) is clamped axially between two springs (17, 18) and wherein the piston rod (1) narrows to form a spigot (10) surrounded by the working piston (3) and a guide bushing (12) is disposed between the spigot (10) and the working piston (3), **characterised in that** on the outer periphery of the guide bushing (12) at least one axially extending groove (19) which is longer than the height of the corresponding bore of the working piston (3) is disposed.

2. Device as claimed in claim 1, **characterised in that** the groove (19) has a cross-section which changes over the height.

3. Device as claimed in claim 1 or 2, **characterised in that** the springs (17, 18) disposed respectively above and below the working piston (3) have a different level of rigidity and/or spring rate.

4. Device as claimed in any one or several of claims 1 to 3, **characterised in that** at least one of the springs (17, 18) has a progressively, linearly or degressively increasing spring rate.

5. Device as claimed in any one or several of claims 1 to 4, **characterised in that** the springs (17, 18) are formed as steel springs.

6. Device as claimed in any one or several of claims 1 to 4, **characterised in that** the springs (17, 18) are formed as synthetic material springs.

7. Device as claimed in any one or several of claims 1 to 6, **characterised in that** the springs (17, 18) are composed of a plurality of individual springs to form a spring packet.

## Revendications

1. Dispositif pour amortir des vibrations en fonction de l'amplitude, en particulier pour l'amortissement de véhicules à moteurs, avec un piston de travail (3) agencé à l'intérieur d'un logement (2) d'amortissement, déplaçable de manière limitée en étant guidé axialement, chargé par un ressort dans le sens axial, relié à une tige de piston (1) plongeant de manière oscillante dans le logement d'amortissement (2), divisant le logement d'amortissement (2) en deux chambres d'amortissement (4, 5), le piston de travail (3) s'étendant axialement entre deux ressorts (17, 18) et la tige de piston (1) se raccordant à une broche (10) entourée par le piston de travail (3), et un manchon de guidage (12) étant agencé entre la broche (10) et le piston de travail (3), **caractérisé en ce qu'**au moins une rainure (19) axiale, présentant une longueur supérieure à la hauteur de l'alésage correspondant du piston de travail (3) est prévue à la périphérie extérieure du manchon de guidage (12).

2. Dispositif selon la revendication 1, **caractérisé en ce que** la rainure (19) présente une section variable sur la hauteur.

3. Dispositif selon la revendication 1 ou 2, **caractérisé en ce que** les ressorts (17, 18) prévus au-dessus et en-dessous du piston de travail (3) présentent une raideur et/ou une flexibilité différente.

4. Dispositif selon une ou plusieurs des revendications 1 à 3, **caractérisé en ce qu'**au moins l'un des ressorts (17, 18) présente une élasticité variant de manière progressive, linéaire ou dégressive.

5. Dispositif selon une ou plusieurs des revendications 1 à 4, **caractérisé en ce que** les ressorts (17, 18) sont des ressorts en acier.

6. Dispositif selon une ou plusieurs des revendications 1 à 4, **caractérisé en ce que** les ressorts (17, 18) sont des ressorts en matière synthétique.

7. Dispositif selon une ou plusieurs des revendications 1 à 6, **caractérisé en ce que** les ressorts (17, 18) sont des paquets de ressorts assemblés à partir de plusieurs ressorts individuels.
